# FASCICULE DE BREVET EUROPEEN

(11) **EP 2 408 720 B1**
(45) Date de publication et mention de la délivrance du brevet: **24.06.2015**
(21) Numéro de dépôt: 10712541.1
(22) Date de dépôt: 16.03.2010
(51) Int. Cl.: C02F 3/00, C02F 3/12, C02F 3/30

(54) **PROCÉDÉ DE RÉGULATION DE L'APPORT D'OXYGÈNE POUR LE TRAITEMENT D'EAU RÉSIDUAIRE, ET INSTALLATION POUR SA MISE EN OEUVRE**
VERFAHREN ZUR STEUERUNG DER SAUERSTOFFZUFUHR ZUR BEHANDLUNG VON ABWASSER UND VORRICHTUNG DAFÜR
METHOD FOR CONTROLLING OXYGEN SUPPLY FOR TREATING WASTEWATER, AND FACILITY FOR IMPLEMENTING SAME

(30) Priorité: 17.03.2009 FR 0901232
(43) Date de publication de la demande: 25.01.2012
(73) Titulaire: Degrémont, 92500 Rueil Malmaison (FR)
(72) Inventeur: HAZARD, Jean-Pierre, F-75016 Paris (FR); DESCAMPS, Patrick, F-78160 Marly Le Roi (FR)
(74) Mandataire: Cabinet Armengaud Aîné
(86) Numéro de dépôt international: PCT/IB2010/051125
(87) Numéro de publication internationale: WO 2010/106487

(56) Documents cités:
- FR-A1- 2 858 609
- JP-A- 2006 055 683
- US-B1- 7 416 669

## Description

La présente invention se rapporte au traitement biologique des eaux usées contenant une pollution azotée sous forme réduite, en particulier de l'azote ammoniacal, traitée par un procédé d'aération alternée de nitrification dénitrification dans un même bassin d'aération.

Plus précisément, l'invention concerne un procédé de régulation de l'apport d'oxygène dans un bassin de traitement biologique d'eau résiduaire par aération alternée comprenant des cycles successifs, chaque cycle comportant une première phase d'aération pour oxyder notamment les composés carbonés et azotés à l'aide de bactéries aérobies, et une seconde phase anoxique pour la réduction des nitrites et des nitrates formés pendant la phase d'aération précédente.

Dans l'état de l'art antérieur, le bassin est équipé de capteurs de mesure d'oxygène dissous et/ou de potentiel d'oxydoréduction, procédé selon lequel on commande l'arrêt d'apport d'oxygène de la phase d'aération au moins lorsque :
- la mesure d'oxygène dissous devient supérieure à un seuil haut,
- ou le potentiel d'oxydoréduction devient supérieur à un seuil haut.

Un procédé de ce genre est connu, notamment d'après le MEMENTO TECHNIQUE de l'EAU, DEGREMONT SUEZ 10^{ème} édition Tome 2, en particulier pages 914, 915.

Dans ce procédé connu, pendant la première phase d'aération la quantité d'oxygène apportée peut être fixe ou régulée selon des principes connus en fonction d'une mesure ou d'une combinaison de mesures d'oxygène dissous, de potentiel d'oxydoréduction ou de pollution entrant dans le bassin d'aération telle que la DCO ou l'azote ammoniacal. La fin de cette phase d'aération est déterminée par des dispositifs connus faisant intervenir une mesure ou une combinaison de mesures d'oxydoréduction, d'oxygène dissous et de temps. Par exemple, l'apport d'oxygène peut être stoppé lorsque le temps d'aération atteint une valeur limite maximum, ou lorsque la mesure du potentiel d'oxydorèduction dans le bassin d'aération est supérieure à un seuil haut depuis un certain temps et sous réserve que la durée de la phase d'aération ait atteint un temps minimum.

Après cette phase d'aération, la seconde phase anoxique permet la réduction des nitrites et des nitrates formés pendant la phase d'aération précédente Les bactéries utilisent alors principalement le carbone apporté par l'eau brute. La fin de cette phase d'anoxie est déterminée par des dispositifs connus faisant intervenir une mesure ou une combinaison de mesures d'oxydoréduction et de temps. Par exemple, l'apport d'oxygène peut être remis en service lorsque le temps d'anoxie atteint une valeur limite maximum, ou lorsque la mesure du potentiel d'oxydoréduction dans le bassin d'aération est inférieure à un seuil bas et sous réserve que la durée de la phase d'anoxie ait atteint un temps minimum.

Toutefois, ces méthodes de régulation de l'apport d'oxygène qui se basent sur des mesures de potentiel d'oxydoréduction et d'oxygène dissous sont sujettes à des dérives à cause principalement :
- d'une part de la difficulté d'entretenir les sondes de mesure de potentiel redox qui sont sensibles à certains composés chimiques présents dans l'eau ;
- d'autre part de la représentation approximative des réactions de nitrification et de dénitrification.

Aussi les régulations sont prévues généralement avec des temporisations de temps mini et maxi des phases d'aération et d'anoxie ainsi qu'avec une possibilité de gérer les phases d'aération, les phases d'anoxie et la quantité d'air dans les phases d'aération, en fonction de l'heure temps réel à la place des mesures de potentiel d'oxydoréduction et d'oxygène dissous, en se basant sur le fait que la quantité de pollution à traiter varie dans la journée en fonction de l'heure qu'il est.

Ces différents « garde-fous » basés sur le temps permettent de sauvegarder le bon fonctionnement des réactions biologiques, mais conduisent souvent à régler les paramètres de régulation de manière sécuritaire, ce qui entraîne bien souvent des dépenses énergétiques peu optimisées.

L'invention a donc pour but, compte tenu de cet état de la technique, de proposer un procédé de régulation de l'apport d'oxygène qui permet d'optimiser l'énergie consommée dans une démarche de développement durable, tout en améliorant le traitement.

Les capteurs de NH4 et NO3 sont plus représentatifs des réactions chimiques mises en jeu dans l'élimination de la pollution azotée que l'oxygène et le redox car on mesure directement les paramètres chimiques résultant des réactions biologiques.

Certains auteurs ont proposé d'utiliser des algorithmes de régulation continue basés sur des mesures de NH4 et NO3, ce qui oblige à introduire dans le bassin d'aération une quantité d'oxygène continument variable. Ce type de régulation continue nécessite des équipements de production d'air à débit variable ou des équipements de régulation continue de débit dont le coût et la difficulté de mise en oeuvre peut être incompatible avec la faible taille d'une installation de traitement biologique par aération séquencée.

Dans le procédé d'aération séquencée, la nitrification et la dénitrification s'effectuent successivement dans le même bassin :
- La nitrification peut se décrire par la réaction chimique globale en présence d'un apport d'oxygène dans le milieu :

   NH4 + 5/2 02 → NO3 + 2 H2O
La réaction est terminée lorsque tout l'azote ammoniacal est éliminé, en d'autres termes, il n'est plus nécessaire d'injecter de l'oxygéne lorsque la mesure de NH4 est proche de zéro.
Certains auteurs (brevet US 7 416 669) ont proposé d'automatiser l'arrêt de l'introduction d'oxygène dans le bassin lorsque la mesure d'azote ammoniacal est proche de zéro, éventuellement associé à certaines conditions de temps d'arrêt minimum ou maximum
- La dénitrification peut se décrire par l'équation chimique globale suivante lorsqu'il n'y a pas d'oxygène dissous dans le milieu liquide :

   2 N03 + 3C → N2 + 3 CO2
La réaction est terminée lorsque tout le nitrate est éliminé. Les bactéries n'ont alors plus d'oxygène disponible et il est nécessaire de ré-oxygéner le milieu pour leur permettre de respirer. En d'autres termes, il est nécessaire d'injecter de l'oxygène lorsque la mesure de NO3 est proche de zéro pour éviter de favoriser la prolifération de bactéries peu propices à la décantation ou la filtration telles que les bactéries filamenteuses.
Certains auteurs (brevet US 7 416 669) ont proposé d'automatiser le redémarrage de l'introduction d'oxygène dans le bassin lorsque la mesure de nitrate est proche de zéro, éventuellement associé à certaines conditions de temps de marche minimum ou maximum

Ces moyens de parvenir à déterminer le moment où se décide la mise en marche ou l'arrêt de l'introduction d'oxygène dans le bassin d'aération par des seuils bas de mesures de NH4 ou de N03 conduisent à des dérives des conditions opératoires dans le temps ayant pour conséquence des insuffisances de traitement ou des surconsommations d'oxygène qui augmentent l'énergie consommée pour les raisons suivantes :
∘ Les mesures d'azote ammoniacal et de nitrate peuvent dériver de 1 ou plusieurs mg/l dans un sens ou dans un autre dans les valeurs proches de zéro. Ces erreurs peuvent être dues par exemple à :
   ▪ Une accumulation de déchets fibreux autour du capteur (filasse)
   ▪ Des dépôts sur la cellule de mesure
   ▪ Une dérive d'étalonnage
   ▪ Une variation de concentration de chlorure dans le milieu qui fausse la mesure de nitrate
   ▪ Une variation de concentration de Potassium dans le milieu qui fausse la mesure d'azote ammoniacal
   ▪ Un vieillissement de la sonde
∘ Lorsque le zéro de la mesure est supérieur à la valeur réelle de concentration, le seuil bas n'est pas toujours atteint et l'alternance des phases d'aération et de non aération n'est pas correctement réalisée
∘ Lorsque la mesure est inférieure à la valeur réelle de concentration, le seuil bas de la mesure est atteint avec anticipation et le procédé n'est pas optimisé

- Dans les valeurs plus élevées, par contre, les dérives des capteurs de NH4 et de NO3 sont relativement faibles par rapport à la mesure absolue et les erreurs induites par ces dérives sont généralement acceptables vis-à-vis de la précision requise pour les garanties de traitement qui s'expriment sur des valeurs moyennes en sortie de l'usine.

Les garanties de traitement sont généralement exprimées en valeur d'azote global (NGL) dont la valeur représente la somme de tous les composés azotés contenus dans l'eau traitée, qu'ils soient sous forme réduite (azote ammoniacal, azote organique) ou sous forme oxydée (nitrates, nitrites).
Il est donc inutile de prendre en compte les seuils hauts des mesures individuelles de chacun de ces composés pour gérer l'apport ou l'arrêt de l'apport d'oxygène dans le bassin d'aération mais plutôt la somme des composés mesurés.
Par ailleurs, il a été constaté que la somme des composés azotés mesurés atteint son maximum après une longue période d'aération et donc, pour mieux assurer la garantie de traitement, le seuil haut de la somme de N-NH4 + N-N03 est pertinent pour stopper l'apport d'air dans le bassin d'aération.

L'invention a pour but, surtout, lorsque des concentrations faibles sont mesurées, d'éviter des erreurs liées à une dérive possible des appareils de mesure.

L'objet de l'invention est, notamment, de détecter la fin des réactions de nitrification et de dénitrification par l'observation d'une évolution significative de la pente des mesures de NH4 ou de N03 selon que l'apport d'oxygène dans le milieu est nul ou constant.

Selon l'invention, un procédé de régulation de l'apport d'oxygène dans un bassin de traitement biologique d'eau résiduaire par aération alternée comprenant des cycles successifs, chaque cycle comportant une première phase d'aération pour oxyder notamment les composés carbonés et azotés à l'aide de bactéries aérobies, et une seconde phase anoxique pour la réduction des nitrites et des nitrates formés pendant la phase d'aération précédente, est caractérisé en ce que :
- on prévoit dans la liqueur du bassin ou dans la liqueur qui sort du bassin au moins un capteur de mesure de l'azote ammoniacal et un capteur de mesure de nitrate,
- on commande la mise en service de l'apport d'oxygène de la phase d'aération à partir de l'évènement de mise en service suivant :
- la vitesse de diminution de la mesure de nitrate devient inférieure à un seuil bas,
- on commande l'arrêt d'apport d'oxygène de la phase d'aération lorsque l'un au moins des évènements déclencheurs suivants se produit :
   - la vitesse de diminution de la mesure d'azote ammoniacal devient inférieure à un seuil bas,
   - la somme des mesures d'azote ammoniacal et de nitrate devient supérieure à un seuil haut.

La mise en oeuvre de ce procédé a donné de bons résultats pour autant que la quantité d'oxygène apportée dans le bassin d'aération était suffisante pour assurer la nitrification de l'azote et la respiration endogène des bactéries.
Par contre, il peut arriver qu'à certaines périodes, l'apport d'oxygène devienne insuffisant face à une arrivée massive de pollution.
Ce peut être le cas, par exemple, de la période de pointe d'une installation, lors d'une arrivée d'effluents industriels ou en début d'une période de pluie lorsque l'effluent apporte un supplément de pollution par curage des réseaux d'égout. L'apport d'oxygène est alors le facteur limitant la nitrification.
On observe alors une faible diminution de la mesure d'azote ammoniacal, voire même parfois une augmentation de la valeur de mesure de l'azote ammoniacal et une mesure d'oxygène dissous résiduel très faible, voire nulle. L'oxygène apporté dans le milieu est prioritairement capté par les bactéries.
En conséquence, si la mesure d'oxygène dissous est insuffisante, par exemple un à deux mg/L, l'apport d'air ne devrait pas être stoppé par le seul fait que la diminution de l'azote ammoniacal est inférieure à un seuil bas.
Selon une variante en dehors du champ de l'invention,
- on prévoit, en plus des capteurs de mesure de l'azote ammoniacal et de nitrate, au moins un capteur de mesure d'oxygène dissous,
- on commande l'arrêt d'apport d'oxygène de la phase d'aération lorsque l'un au moins des évènements déclencheurs suivants se produit :
   - la vitesse de diminution de la mesure d'azote ammoniacal devient inférieure à un seuil bas et la mesure d'oxygène dissous est supérieure à un seuil haut,
   - la somme des mesures d'azote ammoniacal et de nitrate devient supérieure à un seuil haut.

L'automatisation de l'apport d'oxygène est ainsi effectuée en fonction de la diminution des mesures continues de concentration d'azote ammoniacal, de nitrate, en fonction de la somme de ces mesures et éventuellement d'oxygène dissous. Il en résulte une aération mieux adaptée aux besoins, une réduction de la fourniture d'oxygène et une économie d'énergie. Les traitements de nitrification et de dénitrification sont en outre améliorés.

Avantageusement, le seuil bas de la vitesse de diminution de mesure de nitrate pilotant le début de l'apport d'oxygène dans le bassin d'aération est inférieur à 1mg/L/h, par exemple inférieur à 0,5mg/L/h, de préférence depuis plus d'un certain temps, par exemple en particulier depuis plus de 10 minutes.

De préférence, l'arrêt de rapport d'oxygène s'effectue lorsque l'un des évènements suivants survient :
- la diminution de la mesure d'azote ammoniacal dans le bassin d'aération est inférieure à 1mg/L/h, par exemple inférieure à 0,5 mg/L/h, de préférence depuis plus d'un certain temps, par exemple en particulier depuis plus de 10 minutes,
- la somme des mesures de nitrate et d'azote ammoniacal devient supérieure à un seuil haut qui dépend des garanties de traitement en azote global, par exemple de 10 mg/L.

Les évènements déclencheurs ou de mise en service peuvent être temporisés de telle sorte que si le seuil correspondant à un évènement est franchi depuis un temps déterminé, l'arrêt ou la mise en service est commandé sans autre condition.

La quantité d'oxygène apportée dans le bassin d'aération pendant la phase de nitrification peut être constante si les moyens d'oxygénation ne permettent pas de la modifier. Dans le cas contraire, il est avantageux de pouvoir modifier le débit d'oxygène transféré dans le bassin d'aération en fonction des mesures d'azote ammoniacal et/ou de nitrate, en particulier des passages de seuil ou des changements de pente de la courbe représentative.

De préférence, la quantité d'oxygène apportée dans le bassin d'aération pendant une phase de nitrification est déterminée en fonction de la quantité de pollution entrante.
A défaut de mesurer directement la pollution entrante par un ou plusieurs capteurs dédiés à cette fonction, on peut se baser sur la pollution entrante pendant la phase de dénitrification précédente, estimée à partir de la pente de montée de la mesure d'azote ammoniacal pendant tout ou partie de la phase anoxique précédente.

Dans certains cas, en particulier pendant les périodes de forte pollution entrante, le débit d'oxygène transféré dans le bassin correspond au débit nominal de dimensionnement de l'installation jusqu'à ce que la diminution de la mesure d'azote ammoniacal soit inférieure à un seuil bas, en particulier 0,5mg/L/h. A partir de ce moment, le débit d'oxygène transféré peut être réduit à une valeur proportionnelle à la pollution entrante

Dans certains autres cas, en particulier pendant les périodes de faible pollution entrante, le débit d'oxygène transféré dans le bassin peut être avantageusement une valeur proportionnelle à la pollution entrante c'est-à-dire proportionnelle à la pente de montée de la mesure d'azote ammoniacal pendant tout ou partie de la période d'anoxie précédente.

Ainsi, l'énergie nécessaire à l'apport d'oxygène dans le bassin correspond à la valeur juste nécessaire à l'élimination de la pollution carbonée et azotée à traiter, même si l'oxygène dissous reste à une valeur faible, voire nulle.

L'oxygène peut être apporté dans le bassin d'aération séquentiellement ou continûment pendant la phase de nitrification, que ce soit sous forme d'injection d'air atmosphérique ou enrichi en oxygène, ou d'oxygène pur ou d'un fluide contenant de l'oxygène dissous, ou encore par tout autre moyen de brassage introduisant de l'air et/ou de l'oxygène dans le fluide.

Les capteurs de mesure d'azote ammoniacal et / ou de nitrate peuvent être disposés dans le bassin d'aération pour mesurer les composés azotés dans la liqueur du bassin d'aération lui-même. Selon une autre possibilité, les capteurs de mesure d'azote ammoniacal et / ou de nitrate sont disposés de manière à mesurer les composés azotés dans la liqueur sortant du bassin d'aération ou dans un échantillon de liqueur provenant du bassin d'aération.

L'invention est également relative à une installation pour la mise en oeuvre du procédé défini précédemment, cette installation comprenant un bassin de traitement biologique d'eau résiduaire par aération alternée à cycles successifs, chaque cycle comportant une première phase d'aération et une seconde phase anoxique, et étant caractérisée en ce que :
- elle comporte au moins un capteur de mesure de l'azote ammoniacal et un capteur de nitrate de la liqueur dans le bassin ou en sortie du bassin,
- et un moyen de commande programmable de l'apport d'oxygène relié aux capteurs et programmé pour commander :
- la mise en marche d'apport d'oxygène de la phase d'aération à partir de l'évènement suivant, éventuellement temporisé :
   la vitesse de diminution de la mesure de nitrate devient inférieure à un seuil bas, en particulier inférieure à 0,5 mg/L/h depuis plus de 10 mn. ;
- l'arrêt d'apport d'oxygène de la phase d'aération lorsque l'un au moins des évènements suivants, éventuellement temporisés se produit :
   - la vitesse de diminution de la mesure d'azote ammoniacal, devient inférieure à un seuil bas
   - la somme des mesures d'azote ammoniacal et de nitrate devient supérieure à un seuil haut.

Dans un mode de réalisation en dehors du champ de l'invention, l'installation peut comporter, en plus des capteurs de mesure de l'azote ammoniacal et de nitrate, au moins un capteur de mesure d'oxygène dissous, et le moyen de commande de l'apport d'oxygène est relié aux capteurs pour commander l'arrêt d'apport d'oxygène de la phase d'aération lorsque l'un au moins des évènements suivants, éventuellement temporisés se produit :
- la vitesse de diminution de la mesure d'azote ammoniacal devient inférieure à un seuil bas et la mesure d'oxygène dissous est supérieure à un seuil haut,
- la somme des mesures d'azote ammoniacal et de nitrate devient supérieure à un seuil haut.
L'invention consiste, mises à part les dispositions exposées ci-dessus, en un certain nombre d'autres dispositions dont il sera plus explicitement question ci-après à propos d'un exemple de réalisation décrit avec référence aux dessins annexés, mais qui n'est nullement limitatif. Sur ces dessins :
Fig.1 est une vue schématique en plan d'un bassin de traitement biologique d'eau résiduaire par aération alternée, selon l'invention.
Fig. 2 est un diagramme illustrant en fonction du temps porté en abscisse, les courbes comparées sur 24 heures des variations, portées en ordonnée, du potentiel d'oxydoréduction (redox), de la teneur en oxygène dissous, de la teneur en azote ammoniacal N-NH4 et de la teneur en nitrate N-N03 de la liqueur d'un bassin de traitement selon un procédé classique, les échelles étant décalées en ordonnée pour une meilleure lisibilité du diagramme.
Fig.3 illustre une modélisation des courbes de mesure de Fig.2, pour un cycle de nitrification dénitrification,
Fig. 4 est un diagramme semblable à celui de Fig.3 illustrant le procédé selon l'invention lorsque le débit de l'apport d'oxygène n'est pas modulable.
Fig. 5 est un diagramme semblable à celui de Fig.4 illustrant le procédé selon l'invention lorsque le débit de l'apport d'oxygène est diminué pendant la partie du cycle au cours de laquelle l'azote ammoniacal est faible, ce qui est particulièrement préféré lors des périodes de forte pollution entrante, et
Fig. 6 est un diagramme semblable à celui de Fig,5 illustrant le procédé selon l'invention lorsque le débit de l'apport d'oxygène est modulé pendant toute la période de nitrification, ce qui est particulièrement préféré pendant les périodes de plus faible pollution entrante, généralement la nuit.

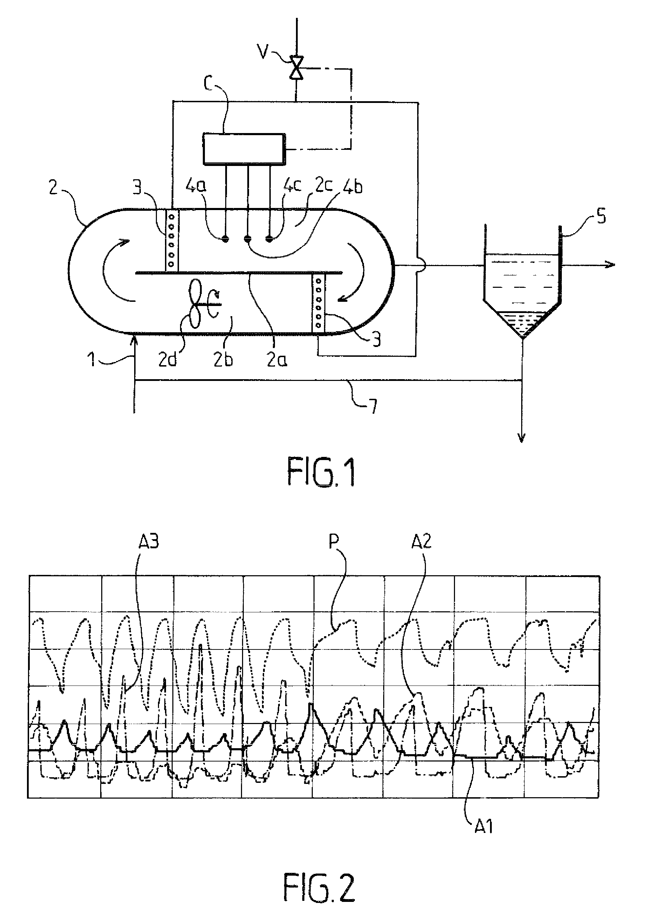

Fig. 1 illustre une installation pour fonctionner suivant le procédé biologique de nitrification dénitrification alternée de l'invention, sans que cette représentation simple restreigne le champ d'application de l'invention. L'eau brute prétraitée 1 entre dans le bassin d'aération 2 en chenal, comportant une cloison médiane 2a qui s'arrête à chaque extrémité avant d'atteindre la paroi du bassin. Un circuit comportant deux branches 2b, 2c entoure la cloison. Au moins un agitateur 2d, notamment à hélice, est prévu dans le bassin pour mettre en mouvement la liqueur autour de la cloison 2a, comme illustré par des flèches.

Le bassin 2 est aéré séquentiellement par un apport d'oxygène grâce à des rampes 3 de buses d'injection situées en travers, dans le fond du bassin. L'apport d'oxygène est réalisé au moyen de procédés connus tels que la diffusion d'oxygène ou d'air atmosphérique enrichi ou non en oxygène, sous une forme dissoute ou sous une forme de grosses, moyennes ou fines bulles.

Selon l'invention, au moins un capteur 4b, ou sonde, est prévu pour la mesure de l'azote ammoniacal N-NH4 et un capteur 4c ou sonde pour la mesure de nitrate N-NO3 de la liqueur du bassin 2, ou qui en sort. Eventuellement, l'oxygène dissous de la liqueur du bassin 2, ou qui en sort, est contrôlé par un ou plusieurs capteurs 4a. Le temps est également mesuré.

Avantageusement, les capteurs 4a, 4b et 4c sont installés dans le bassin 2, dans la même zone, pour intervenir dans le contrôle de l'apport d'oxygène. En variante, des capteurs peuvent être installés en sortie du bassin 2, avant ou après la décantation / filtration 5, ou des mesures peuvent être effectuées sur des échantillons de liqueur prélevès dans le bassin 2.

Un exemple non limitatif de capteur pour une mesure sélective en ligne des ions ammonium et nitrate est fourni par le capteur commercialisé sous la dénomination « capteur VARION® » par la société allemande Wissenschaftlich-Technische Werkstatten GmbH

La liqueur entre ensuite dans un dispositif de décantation ou de filtration 5 qui sépare l'eau traitée 6 de la boue recirculée 7 dans le bassin d'aération. Dans la représentation schématique de Fig.1, le dispositif 5 est en coupe verticale, alors que le bassin 2 est vu de dessus.

Des relevés ont été effectués sur plusieurs sites équipés de sondes de mesure d'azote ammoniacal et de nitrate.

Un exemple est illustré par Fig. 2 où sont représentées les courbes comparées sur 24 heures des mesures enregistrées par des capteurs installés dans un même bassin d'aération. On a ainsi observé l'évolution comparative des mesures :
- de potentiel d'oxydoréduction, représentées par une courbe P,
- d'azote ammoniacal N-NH4, représentées par une courbe A1,
- de nitrate N-NO3, représentées par une courbe A2, et
- d'oxygène dissous, représentées par une courbe A3.

Les échelles en ordonnée sont un peu décalées pour une meilleure lisibilité.

On observe dans cet exemple de Fig.2, onze cycles d'aération et d'anoxie, l'apport d'oxygène pendant la phase d'aération étant assuré par un débit d'air surpressé constant, le début et la fin de chaque période d'aération étant déterminée automatiquement en fonction de seuils de potentiel d'oxydoréduction et de temporisations.

On a pu constater que les mesures continues de la concentration en azote ammoniacal et en nitrate, montrent que les mesures de potentiel d'oxydoréduction et d'oxygène dissous représentent imparfaitement les variations des phénomènes de nitrification et de dénitrification alternées.

Pendant la phase d'aération, une valeur inférieure à 1mg/L d'azote ammoniacal n'est pas toujours atteinte à la même valeur de potentiel d'oxydoréduction. Pendant la phase d'anoxie la disparition complète des nitrates s'effectue à des valeurs de potentiel d'oxydoréduction qui peuvent être différentes au cours de la journée.

Pendant la phase d'aération, la nitrification est capable de se réaliser tant que l'oxygène est apporté dans le bassin, même si la sonde ou capteur de mesure d'oxygène dissous indique une valeur nulle. L'apparition d'une valeur élevée de mesure d'oxygène dissous apparaît essentiellement lorsque la vitesse de nitrification est faible, ce qui traduit une dépense énergétique gaspillée en raison de l'apport inutile d'oxygène.

Pendant la phase d'anoxie, la dénitrification ne débute pas au moment de l'arrêt de l'apport d'oxygène car la nitrification se poursuit si l'oxygène dissous est présent dans le bassin d'aération.

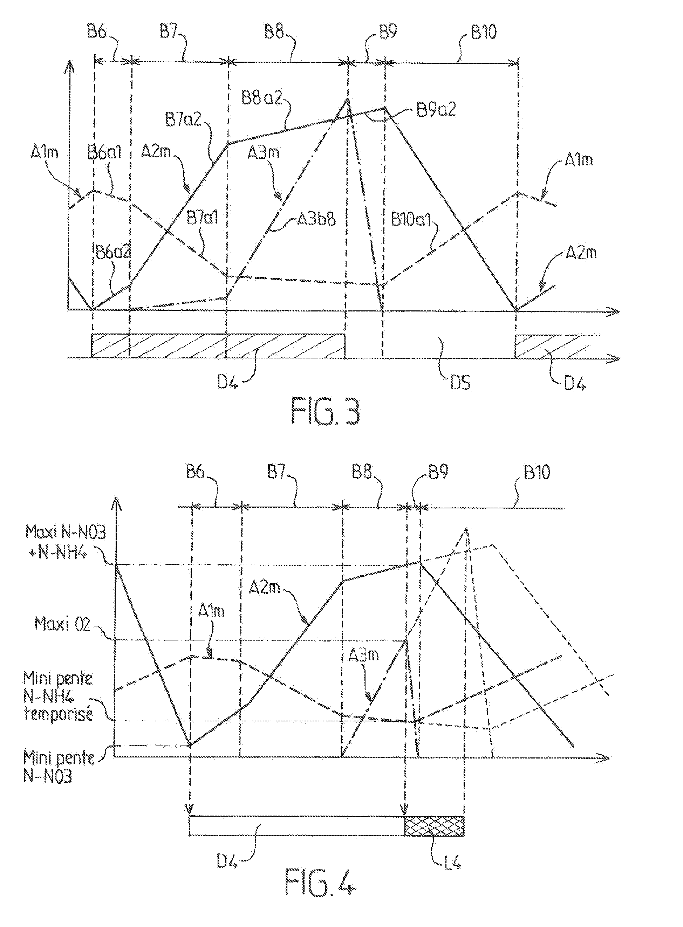

Fig. 3 illustre une modélisation des courbes de mesure pendant un cycle d'aération et d'anoxie selon un procédé classique. Les courbes comparées en fonction du temps sont les mesures :
- d'azote ammoniacal N-NH4 représentées par la courbe A1m,
- de nitrate représentées par la courbe A2m, et
- d'oxygène dissous représentées par la courbe A3m
Les capteurs 4a, 4b et 4c sont placés sensiblement au même point du bassin d'aération biologique subissant alternativement une période d'alimentation en air à débit constant D4 et une période d'anoxie D5. Le total des périodes D4 et D5 peut être de l'ordre de 1 heure à 4 heures.

Dès l'apport d'air dans le bassin, la nitrification s'observe dans une sous-phase B6 par la pente descendante B6a1 de la mesure d'azote ammoniacal et la pente montante B6a2 de la mesure de nitrate. Pendant cette première sous-phase, les pollutions carbonée et azotée présentes dans le bassin sont transformées malgré une mesure d'oxygène dissous nulle ou sensiblement nulle.

Puis, le débit de l'apport d'air restant inchangé, la nitrification s'observe dans une sous-phase B7 à une vitesse plus élevée. Au cours de cette seconde sous phase B7, la pollution carbonée accumulée dans le bassin lors de la phase anoxique précédente a pratiquement disparu et le rendement de nitrification est plus élevé malgré une mesure d'oxygène dissous proche de zéro. La pente descendante B7a1 de la mesure d'azote ammoniacal et la pente montante B7a2 de la mesure de nitrate sont plus fortes que dans B6.

La troisième sous-phase B8 s'observe lorsque la pente de la mesure d'azote ammoniacal est faible, en particulier lorsqu'elle est proche de 0,5 mg/L/h. La pollution azotée accumulée dans le bassin lors de la phase anoxique précédente a pratiquement disparu. L'aération sert uniquement à éliminer la pollution entrante qui est le facteur limitant la vitesse de nitrification.

Le débit d'air restant constant pendant la période D4, pour une pollution à éliminer plus faible, la mesure d'oxygène dissous augmente considérablement selon la pente A3b8, traduisant ainsi un ratio énergie d'aération sur quantité de pollution éliminée beaucoup plus élevé que pendant les sous-phases précédentes.

La quatrième sous-phase B9 correspond au début de la période d'anoxie D5. L'apport d'air est stoppé mais l'oxygène dissous présent dans le bassin continue la réaction de nitrification au même rythme que dans la sous-phase précédente B8 (la pente de B9a2 est la même que celle de B8a2) alors que l'on s'attendrait à observer une dénitrification.

La cinquième sous-phase B10 de dénitrification n'a lieu que lorsque tout l'oxygène dissous a été consommé. Pendant ce temps, la mesure d'azote ammoniacal B10a1 augmente au rythme de la quantité de pollution entrant dans le bassin d'aération.

L'invention a pour premier objet de limiter l'apport d'oxygène dans le bassin d'aération soumis alternativement à des phases de nitrification et de dénitrification selon une stratégie qui dépend de la capacité d'agir sur le dispositif d'apport d'oxygène.

La première démarche consiste à diminuer le temps d'aération dans la sous-phase B8, comme illustré sur Fig.4, c'est à dire à stopper l'apport d'oxygène dans le bassin d'aération 2 lorsque le ratio quantité d'oxygène apporté sur pollution à éliminer est le plus fort afin de privilégier les apports d'oxygène dans les sous-phases B6 et B7, périodes pendant lesquelles l'énergie consommée par les moyens d'aération est la mieux utilisée. Le sommet du segment de courbe A3m sur Fig.4 correspond au seuil maximum fixé d'oxygène dissous Maxi 02, et est situé à un niveau plus bas que sur Fig.3

Selon l'invention, comme visible sur Fig.4, la durée de la sous-phase B8 est réduite par rapport à celle du procédé classique de Fig.3, de sorte que la durée D4 de la phase d'aération est réduite d'une plage L4. L'aération sera moins longue et plus fréquente.

Cependant, pour ne pas dégrader la qualité de la boue, en particulier sa capacité à décanter et à être déshydratée, et pour valider que l'apport d'oxygène n'est pas un facteur limitant la nitrification, on peut s'assurer que la mesure d'oxygène dissous atteindra ponctuellement à chaque cycle une valeur au moins égale à un seuil de l'ordre de 1 à 2 mg/L, noté Maxi 02 sur Fig. 4.

Selon l'invention, l'apport d'oxygène dans le bassin d'aération est donc stoppé si l'une des conditions suivantes est satisfaite :
- la vitesse de diminution de la mesure d'azote ammoniacal est inférieure à une valeur de seuil minimum, en particulier de 0,5 mg/L/h depuis un certain temps, et la mesure d'oxygène dissous est supérieure à un seuil haut maxi 02, notamment d'environ 1,5mg/L,
- ou l'azote global, c'est-à-dire la somme des mesures d'azote ammoniacal et de nitrate devient supérieure à un seuil haut, déterminé en fonction des garanties de traitement, par exemple 10mg (N-NH4 + N-NO3) / L.

Une temporisation est en outre prévue pour chacun des événements déclencheurs. Ainsi, en l'absence de mesure d'oxygène dissous, ou si la sonde 4a est défaillante, l'arrêt de l'apport d'oxygène interviendra un certain temps, notamment d'environ 10 minutes après que la condition relative à la diminution de la mesure d'azote ammoniacal sera satisfaite.

L'installation selon l'invention comprend des moyens de commande C (Fig.1) programmable, notamment un contrôleur, reliés aux capteurs 4a, 4b et 4c, propres à commander une électrovanne V commandant le débit d'apport d'oxygène aux rampes 3. L'électrovanne V peut être remplacée par un surpresseur d'air.

Lorsque le dispositif d'apport d'oxygène peut être modulé, par exemple en ayant la possibilité de faire varier le débit d'air introduit dans le bassin d'aération, il est alors avantageux de diminuer cet apport d'oxygène dans la sous-phase B8.
En effet, la quantité d'oxygène à introduire dans les phases B6 et B7 dépend essentiellement de la cinétique de nitrification en fonction de paramètres tels que la quantité de bactéries nitrifiantes et la température, tandis que dans la phase B8, cette quantité d'oxygène est directement dépendante de la quantité de pollution entrant dans le bassin d'aération.

Or, cette quantité de pollution entrante est en relation directe avec la vitesse de montée de la mesure d'azote ammoniacal B10a1 pendant la phase d'anoxie B10 précédente, sans avoir besoin de la mesurer directement dans l'eau brute.

Selon l'invention, si le dispositif d'apport d'oxygène peut être modulé, alors, lorsque la pente d'abaissement de la mesure d'azote ammoniacal est inférieure au seuil bas, notamment 0,5 mg N-NH4/L/h, la quantité d'oxygène introduite dans le bassin d'aération sera proportionnelle à la vitesse de montée de la mesure d'azote ammoniacal pendant tout ou partie de la phase d'anoxie précédente.
Le coefficient de proportionnalité est ajustable par l'opérateur en fonction des caractéristiques des équipements.
L'apport d'oxygène est stoppé lorsque la somme des mesures d'azote ammoniacal et de nitrate est supérieure à un seuil haut ou après un certain temps réglable.

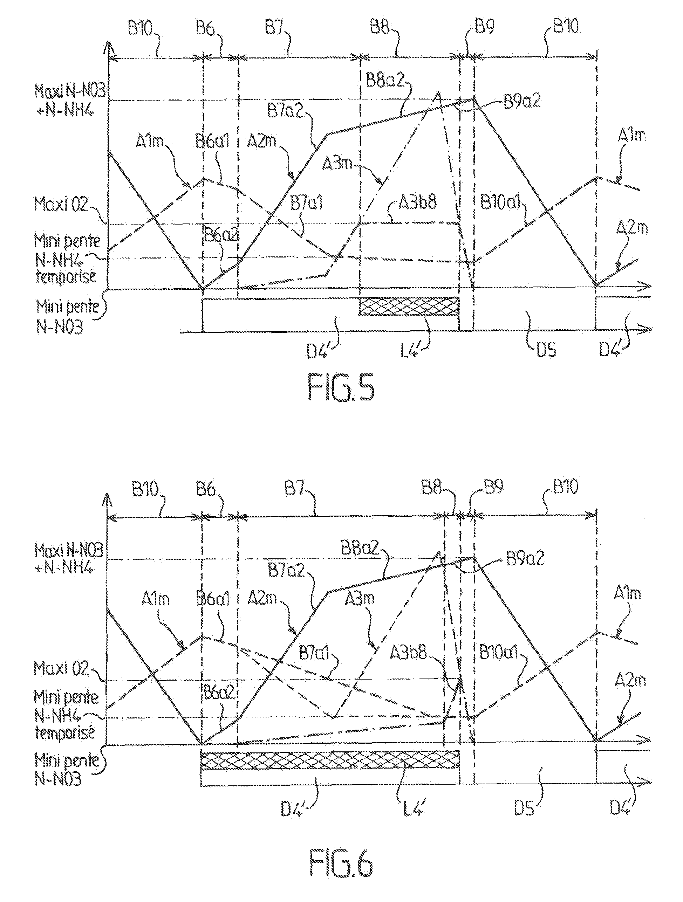

Sur les Fig. 5 et 6, la période D4' correspond à une période d'alimentation en air à débit pouvant être modulé. La hauteur complète du rectangle représentant la période D4' correspond au débit d'air nominal d'aération de l'installation. La zone L4,' correspond à la partie du cycle où l'oxygénation est réduite, sans être supprimée. La hauteur de la zone L4' représente la diminution du débit d'air.

Fig. 5 correspond à une période de forte pollution entrante : on alimente en air pendant les sous-phases B6 et B7 au débit nominal D4', jusqu'à atteindre le seuil bas de la pente de descente de N-NH4, puis on réduit le débit d'oxygénation dans la sous-phase B8 de la valeur correspondant à la hauteur de L4' jusqu'à la fin de B8, la réduction étant calculée en fonction de la pente de montée de l'azote ammoniacal, A1m (pollution entrante) pendant la sous-phase B10 précédente.

Selon l'invention, si le dispositif d'apport d'oxygène peut être modulé pendant toute la durée de la phase d'aération, en particulier dans une période de sous charge de la station, la quantité d'oxygène introduite dans le bassin d'aération est proportionnelle à la vitesse de montée de la mesure d'azote ammoniacal pendant tout ou partie de la phase d'anoxie précédente.

L'apport d'oxygène est stoppé lorsque la somme des mesures d'azote ammoniacal et de nitrate est supérieure a seuil haut_ou après un certain temps.

Fig. 6 correspond à une période de faible pollution entrante (par exemple la nuit) : pendant les sous-phases d'aération B6 a B8, on alimente à un débit d'oxygénation réduit de la hauteur de la zone L4', la réduction étant calculée en fonction de la pente de A1m (pollution ou charge entrante) pendant la sous-phase B10 précédente.

L'invention permet :
- d'assurer l'élimination de l'azote ammoniacal, grâce à la mesure directe de N-NH4
- d'assurer l'élimination de l'azote total maitrisé par la somme des mesures de N-NO3 plus N-NH4,
- d'optimiser l'énergie consommée en limitant l'aération aux périodes de meilleure efficacité,
- de s'affranchir des dérives des capteurs de NH4 et N03 au voisinage de zéro en détectant des seuils bas de diminution des mesures au lieu des seuils bas des mesures elles mêmes.

## Revendications

1. Procédé de régulation de l'apport d'oxygène dans un bassin de traitement biologique d'eau résiduaire par aération alternée comprenant des cycles successifs, chaque cycle comportant une première phase d'aération pour oxyder notamment les composés carbonés et azotés à l'aide de bactéries aérobies, et une seconde phase anoxique pour la réduction des nitrites et des nitrates formés pendant la phase d'aération précédente,
**caractérisé en ce que** :
- on prévoit dans la liqueur du bassin ou dans la liqueur qui sort du bassin au moins un capteur de mesure de l'azote ammoniacal et un capteur de mesure de nitrate,
- on commande la mise en service de l'apport d'oxygène de la phase d'aération à partir de l'événement de mise en service suivant :
- la vitesse de diminution de la mesure de nitrate devient inférieure à un seuil bas,
- on commande l'arrêt d'apport d'oxygène de la phase d'aération lorsque l'un au moins des évènements déclencheurs suivants se produit :
- la vitesse de diminution de la mesure d'azote ammoniacal, devient inférieure à un seuil bas,
- la somme des mesures d'azote ammoniacal et de nitrate devient supérieure à un seuil haut.

2. Procédé selon la revendication 1, **caractérisé en ce que** le seuil bas de la vitesse de diminution de la mesure de nitrate pilotant le début de l'apport d'oxygène dans le bassin d'aération est inférieur à 1 mg/L/h.

3. Procédé selon la revendication 1, **caractérisé en ce que** le seuil bas de la vitesse de diminution d'azote ammoniacal est inférieur à 1 mg/L/h.

4. Procédé selon l'une quelconque des revendications précédentes, **caractérisé en ce que** les évènements déclencheurs ou de mise en service sont temporisés de telle sorte que si le seuil correspondant à un évènement est franchi depuis un temps déterminé, l'arrêt ou la mise en service est commandé sans autre condition.

5. Procédé selon l'une quelconque des revendications précédentes, **caractérisé en ce que** la quantité d'oxygène apportée dans le bassin d'aération pendant la phase de nitrification est déterminée en fonction des mesures d'azote ammoniacal et/ou de nitrate, en particulier passage de seuil ou changement de pente de la courbe représentative.

6. Procédé selon l'une quelconque des revendications précédentes, **caractérisé en ce que** la quantité d'oxygène apportée dans le bassin d'aération pendant une phase de nitrification est déterminée en fonction de la pente de montée de la mesure d'azote ammoniacal pendant tout ou partie de la phase anoxique précédente.

7. Installation pour la mise en oeuvre d'un procédé selon la revendication 1, comprenant un bassin (2) de traitement biologique d'eau résiduaire par aération alternée à cycles successifs, chaque cycle comportant une première phase d'aération et une seconde phase anoxique,
**caractérisée en ce que** :
- elle comporte au moins un capteur (4b) de mesure de l'azote ammoniacal et un capteur (4c) de nitrate de la liqueur dans le bassin ou en sortie du bassin,
- et un moyen de commande (C) programmable de l'apport d'oxygène, relié aux capteurs (4b et 4c) et programmé pour commander :
- la mise en marche d'apport d'oxygène de la phase d'aération à partir de l'évènement suivant :
- la vitesse de diminution de la mesure de nitrate devient inférieure à un seuil bas.
- l'arrêt d'apport d'oxygène de la phase d'aération lorsque l'un au moins des évènements suivants se produit :
- la vitesse de diminution de la mesure d'azote ammoniacal, devient inférieure à un seuil bas
- la somme des mesures d'azote ammoniacal et de nitrate devient supérieure à un seuil haut.

8. Installation selon la revendication 7, **caractérisée en ce que** le capteur (4b) de mesure d'azote ammoniacal et / ou le capteur (4c) de nitrate est disposé dans le bassin d'aération (2) pour mesurer les composés azotés dans la liqueur du bassin d'aération lui-même.

9. Installation selon la revendication 7 ou 8, **caractérisée en ce que** le capteur de mesure d'azote ammoniacal et / ou de nitrate est disposé de manière à mesurer les composés azotés dans la liqueur sortant du bassin d'aération, avant ou après la décantation / filtration (5), ou dans un échantillon de liqueur provenant du bassin d'aération.

## Patentansprüche

1. Verfahren zur Regelung der Sauerstoffzufuhr in einem Becken zur biologischen Behandlung von Abwasser durch alternierende Belüftung mit aufeinanderfolgenden Zyklen, wobei jeder Zyklus eine erste Belüftungsphase, um insbesondere die Kohlenstoff- oder Stickstoffverbindungen mit Hilfe von aeroben Bakterien zu oxidieren, sowie eine zweite anoxische Phase für die Reduktion der Nitrite und der Nitrate, die während der vorhergehenden Belüftungsphase gebildet werden, umfasst,
**dadurch gekennzeichnet, dass**:
- in dem Bad des Beckens oder in dem das Becken verlassenden Bad wenigstens ein Sensor zur Messung von Ammoniumstickstoff und ein Sensor zur Nitrat-Messung vorgesehen werden,
- das Einschalten der Sauerstoffzufuhr der Belüftungsphase anhand des folgenden Einschaltereignisses gesteuert wird:
- die Abnahmegeschwindigkeit der Nitrat-Messung unterschreitet eine untere Schwelle,
- das Anhalten der Sauerstoffzufuhr der Belüftungsphase gesteuert wird, wenn wenigstens eines der folgenden auslösenden Ereignisse auftritt:
- die Abnahmegeschwindigkeit der Ammoniumstickstoff-Messung unterschreitet eine untere Schwelle,
- die Summe der Ammoniumstickstoff- und Nitrat-Messungen überschreitet eine obere Schwelle.

2. Verfahren nach Anspruch 1, **dadurch gekennzeichnet, dass** die untere Schwelle der Abnahmegeschwindigkeit der Nitrat-Messung, die den Beginn der Sauerstoffzufuhr in das Belüftungsbecken steuert, unter 1 mg/L/h liegt.

3. Verfahren nach Anspruch 1, **dadurch gekennzeichnet, dass** die untere Schwelle der Ammoniumstickstoff-Abnahmegeschwindigkeit unter 1 mg/L/h liegt.

4. Verfahren nach einem der vorhergehenden Ansprüche, **dadurch gekennzeichnet, dass** die auslösenden oder Einschalt-Ereignisse derart verzögert sind, dass wenn die einem Ereignis entsprechende Schwelle seit einer bestimmten Zeit überschritten ist, das Anhalten oder das Einschalten ohne weitere Bedingung gesteuert wird.

5. Verfahren nach einem der vorhergehenden Ansprüche, **dadurch gekennzeichnet, dass** die während der Nitrifikationsphase dem Belüftungsbecken zugeführte Sauerstoffmenge in Abhängigkeit von den Ammoniumstickstoff- und/oder Nitrat-Messungen, insbesondere Schwellenübergang oder Neigungsänderung der repräsentativen Kurve, bestimmt wird.

6. Verfahren nach einem der vorhergehenden Ansprüche, **dadurch gekennzeichnet, dass** die während einer Nitrifikationsphase dem Belüftungsbecken zugeführte Sauerstoffmenge in Abhängigkeit von der Steigung der Ammoniumstickstoff-Messung während der gesamten vorhergehenden anoxischen Phase oder eines Teils dieser bestimmt wird.

7. Anlage für die Durchführung eines Verfahrens nach Anspruch 1, umfassend ein Becken (2) zur biologischen Behandlung von Abwasser durch alternierende Belüftung mit aufeinanderfolgenden Zyklen, wobei jeder Zyklus eine erste Belüftungsphase und eine zweite anoxische Phase umfasst,
**dadurch gekennzeichnet, dass**:
- sie wenigstens einen Sensor (4b) zur Messung von Ammoniumstickstoff und einen Sensor (4c) für Nitrat des Bades in dem Becken oder am Ausgang des Beckens umfasst, sowie
- ein programmierbares Mittel zur Steuerung (C) der Sauerstoffzufuhr, das mit den Sensoren (4b und 4c) verbunden und dazu programmiert ist, zu steuern:
- das Einschalten der Sauerstoffzufuhr der Belüftungsphase anhand des folgenden Ereignisses:
- die Abnahmegeschwindigkeit der Nitrat-Messung unterschreitet eine untere Schwelle,
- das Anhalten der Sauerstoffzufuhr der Belüftungsphase, wenn wenigstens eines der folgenden Ereignisse auftritt:
- die Abnahmegeschwindigkeit der Ammoniumstickstoff-Messung unterschreitet eine untere Schwelle,
- die Summe der Ammoniumstickstoff- und Nitrat-Messungen überschreitet eine obere Schwelle.

8. Anlage nach Anspruch 7, **dadurch gekennzeichnet, dass** der Sensor (4b) zur Ammoniumstickstoff-Messung und/oder der Nitrat-Sensor (4c) in dem Belüftungsbecken (2) angeordnet ist/sind, um die Stickstoffverbindungen in dem Bad des Belüftungsbeckens selbst zu messen.

9. Anlage nach Anspruch 7 oder 8, **dadurch gekennzeichnet, dass** der Sensor zur Ammoniumstickstoff-Messung und/oder für Nitrat angeordnet ist/sind, um die Stickstoffverbindungen in dem das Belüftungsbecken verlassenden Bad, vor oder nach Klären / Filtern (5), oder in einer Probe des aus dem Belüftungsbecken stammenden Bades zu messen.

## Claims

1. Method of regulating the oxygen supply into a basin for the biological treatment of wastewater by alternating aeration comprising successive cycles, each cycle comprising an aeration first phase, for oxidizing especially the carbon and nitrogen compounds using aerobic bacteria, and an anoxic second phase, for reducing the nitrites and nitrates formed during the preceding aeration phase, **characterized in that**:
- at least one ammoniacal nitrogen measurement sensor and one nitrate measurement sensor are provided in the liquor of the basin or in the liquor that leaves the basin;
- a supply of oxygen in the aeration phase is actuated on the basis of the following operating event:
- the rate of decrease of the nitrate measurement drops below a low threshold; and
- the supply of oxygen in the aeration phase is stopped when at least one of the following triggering events occurs:
- the rate of decrease of the ammoniacal nitrogen measurement drops below a low threshold;
- the sum of the ammoniacal nitrogen and nitrate measurements exceeds a high threshold.

2. Method according to Claim 1, **characterized in that** the low threshold for the rate of decrease of the nitrate measurement controlling the onset of oxygen supply into the aeration basin is less than 1 mg/L/h.

3. Method according to Claim 1, **characterized in that** the low threshold for the rate of decrease of ammoniacal nitrogen is less than 1 mg/L/h.

4. Method according to any one of the preceding claims, **characterized in that** the triggering or operating events are delayed in such a way that if the threshold corresponding to an event is violated after a certain time, the oxygen supply is stopped or actuated without any other condition.

5. Method according to any one of the preceding claims, **characterized in that** the amount of oxygen supplied into the aeration basin during the nitrification phase is determined according to the ammoniacal nitrogen and/or nitrate measurements, in particular a threshold violation or a change of slope of the representative curve.

6. Method according to any one of the preceding claims, **characterized in that** the amount of oxygen supplied into the aeration basin during a nitrification phase is determined according to the rate of rise of the ammoniacal nitrogen measurement over all or part of the preceding anoxic phase.

7. Plant for implementing a method according to Claim 1, comprising a basin (2) for the biological treatment of wastewater by alternating aeration with successive cycles, each cycle comprising an aeration first phase and an anoxic second phase, **characterized in that** it comprises:
- at least one ammoniacal nitrogen measurement sensor (4b) and one nitrate sensor (4c) of the liquor in the basin or outside the basin; and
- a programmable oxygen supply control means (C) connected to the sensors (4b and 4c) and programmed so as to:
turn on the oxygen supply in the aeration phase on the basis of the following event:
- the rate of decrease of the nitrate measurement drops below a low threshold;
- stop the supply of oxygen in the aeration phase when at least one of the following events occurs:
- the rate of decrease of the ammoniacal nitrogen measurement drops below a low threshold;
- the sum of the ammoniacal nitrogen and nitrate measurements exceeds a high threshold.

8. Plant according to Claim 7, **characterized in that** the ammoniacal nitrogen measurement sensor (4b) and/or the nitrate sensor (4c) is/are placed in the aeration basin (2) in order to measure the nitrogen compounds in the liquor of the aeration basin itself.

9. Plant according to Claim 7 or 8, **characterized in that** the ammoniacal nitrogen measurement and/or nitrate sensor is/are placed so as to measure the nitrogen compounds in the liquor leaving the aeration basin, before or after the settling/filtration unit (5), or in a specimen of the liquor taken from the aeration basin.
